# EUROPEAN PATENT SPECIFICATION

(11) **EP 3 586 346 B1**
(45) Date of publication and mention of the grant of the patent: **28.12.2022**
(21) Application number: 18712011.8
(22) Date of filing: 20.02.2018
(51) Int. Cl.: H01G 13/02, H01G 13/00, H01G 11/84, H01G 11/74, H01G 11/76, H01M 10/04, H01M 4/70, B65H 20/24, H01M 10/0587, H01M 50/538

(54) **MACHINING APPARATUS AND METHOD**
BEARBEITUNGSVORRICHTUNG UND -VERFAHREN
APPAREIL ET PROCÉDÉ D'USINAGE

(30) Priority: 21.02.2017 IT 201700019129; 21.02.2017 IT 201700019147; 21.02.2017 IT 201700019166
(43) Date of publication of application: 01.01.2020
(60) Divisional application: 20172543.9
(73) Proprietor: Manz Italy S.r.l., 40037 Sasso Marconi (BO) (IT)
(72) Inventor: SALE, Massimiliano, 40037 Sasso Marconi (Bologna) (IT); BARBIERI, Pantaleone, 65028 Tocco da Casauria (Pescara) (IT)
(74) Representative: Bergadano, Mirko
(86) International application number: PCT/IB2018/051021
(87) International publication number: WO 2018/154431

(56) References cited:
- EP-A2- 1 207 565
- WO-A1-2014/135288
- WO-A1-2015/181508
- KR-A- 20070 063 652
- US-A1- 2009 239 133
- US-A1- 2010 252 603

## Description

### Background of the invention

The invention relates to a machining apparatus and method, in particular for machining continuous material (in the form of belt, strip, sheet, etc).

Specifically but not exclusively, the invention can be applied to produce electrical energy storage devices, it being provided, in particular, that the material machined by the apparatus and/or method in question is wound to make an electrical energy storage device.

In particular, it is possible to provide for the machining performed with the apparatus and/or method of the invention comprising blanking portions of material to form electrode tabs of an electrical energy storage device.

It is known to produce electrical energy storage devices by winding material around a core, where the material, before being wound, is cut to form a plurality of electrode tabs that are spaced apart from one another that, in the wound product, will have to be superimposed on one another.

Patent publication WO 2014/135288 A1 shows a laser cutting system that cuts an electrode belt to form a plurality of electrode tabs that in the wound product will be superimposed on one another.

Patent publication US 2009/0239133 A1 shows a wound product with two electrode belts, one positive and the other negative, in which each belt has various superimposed electrode tabs that are successively laminated.

Patent publication WO 2013/186745 A2 shows blanking of a continuously advancing electrode belt, in which a portion of the belt is stopped intermittently by a conveying system with two eccentric rollers.

One of the problems of the prior art is to ensure correct reciprocal superimposing of the electrode tabs in the wound product, taking account of the fact that the dimensions of the wound product increase progressively.

### Summary of the invention

One object of the invention is to provide a machining apparatus and/or method that is able to solve the aforesaid prior art problem.

One advantage is to provide a machining apparatus and/or method that is suitable for producing electrical energy storage devices.

One advantage is to enable electrode tabs to be formed on the material being machined in the positions that are suitable for ensuring correct reciprocal superimposing of the tabs in the wound product.

One advantage is to make an apparatus and/or a method for machining continuous material with high productivity.

One advantage is to permit the production of electrical energy storage devices of high quality with high efficiency.

One advantage is to make available a machining apparatus, in particular for blanking material, which is constructionally simple and cheap.

Such advantages and still others are achieved by an apparatus according to claim 1 and/ or a method according to claim 10. Embodiments of the invention are set forth with appended dependent claims.

In one embodiment, one machining method comprises the steps of: feeding material along a path; performing a first machining task with a first machining device that operates along the path with alternating opening and closing operating cycles; performing a second machining task, with a second machining device that operates along the path downstream of the first machining device with alternating opening and closing operating cycles; varying the length of the portion of path comprised between the first and the second machining device (at each operating cycle) in such a manner as to vary the distance between the machined portions of material.

The machining tasks may comprise, in particular, blanking to make electrode tabs, in which the variation in distance (step) between the electrode tabs means that in the wound product the tabs can be superimposed on one another, taking account of the dimensions of the wound product.

In particular, the length of the feed path portion comprised between the two machining (blanking) devices is increased progressively at each operating cycle so as to increase the step between the machined portions.

It is further disclosed a machining apparatus comprises: a material feed path; two machining (blanking) devices arranged on the feed path to machine (blank), with alternating operating cycles, portions of material that are spaced apart from one another (forming electrode tabs); means for varying (increasing) the length of the path portion comprised between the two machining devices (at each operating cycle) such as to vary (increase) the distance (step) between the machined portions of material. The material is intended to be wound to form a wound product (electrical energy storage device) and the aforesaid distance variation is used so that in the wound product the machined portions are in desired positions (alignment of the electrode tabs), taking account of the fact that the dimensions of the wound product increase progressively during winding.

### Brief description of the drawings

In the following reference is made to several apparatus and methods that may include embodiments of the invention as set forth with the appended claims as well as additional examples that are useful to understand the invention but falling outside the scope of the invention set forth with the appended set of claims. The invention can be better understood and implemented with reference to the attached drawings that illustrate one embodiment thereof by way of non-limiting example.
Figure 1 is a diagram, in a vertical elevation, of a first embodiment of a machining apparatus made according to the present invention.
Figure 2 is a diagram, in a top view, of the two blanking devices of the apparatus of figure 1.
Figure 3 shows, in a partial top view, one product embodiment (electrode belt) obtained by the machining apparatus of figure 1.
Figure 4 is a fictitious representation in order to show the various relative positions adopted by the product of figure 3 with respect to the two blanking devices of the apparatus of figure 1 in various blanking cycles during machining.
Figures 5 to 8 show four steps in sequence of the machining of the product of figure 3 by the apparatus of figure 1, in a fictitious representation in order to show the variation of the distances L1, L2, L3, L4 of the material feed path portion between the two blanking devices.
Figure 9 is a diagram, in a vertical elevation, of a second embodiment of a machining apparatus made according to the present invention.
Figure 10 is a diagram, in a vertical elevation, of a third embodiment of a machining apparatus made according to the present invention.
Figure 11 is a diagram, in a vertical elevation, of a fourth embodiment of a machining apparatus made according to the present invention.
Figure 12 is the diagram of figure 11 in another operating configuration.
Figure 13 illustrates schematically one embodiment of how the product (electrode belt) of figure 3 can be wound to form an electrical energy storage device, without showing, for the sake of simplicity, the other components of the device (for example the other electrode and/or the separator/s).
Figure 14 illustrates schematically one embodiment of a wound product that includes two electrode belts (cathode and anode), without showing, for the sake of simplicity, the other components of the electrical energy storage device (the separator/s).
Figures 15 and 16 show two embodiments of wound product that are similar to those of figures 13 and 14, in which the electrode tabs are present only on one half of the electrical energy storage device.

### Detailed description

With reference to the figures mentioned above, for greater clarity and simplicity of exposition, analogous elements have been indicated by the same numbering, even if they belong to different embodiments.

With 1, overall a machining apparatus has been indicated, in particular for machining (for example blanking or cutting) material/s M in the form of a belt, strip, sheet, etc. The machining apparatus 1 may be used, in particular, in the production of an electrical energy storage device, for example for blanking a material M (electrode belt) so as to form a plurality of electrode tabs t1, t2, t3, ...., tN, distributed in the length of the material M at preset mutual distances (non-constant distances). The material M may comprise suitable material for forming an electrical energy storage device. The material M may comprise, for example, an electrode belt or other material of known type that is not illustrated here in greater detail.

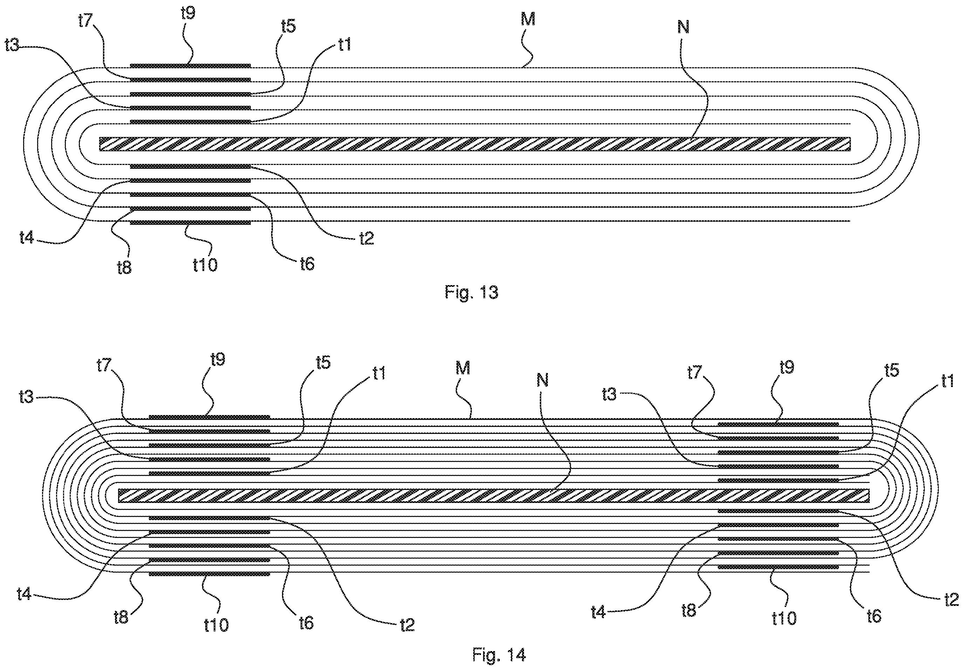

The material M, machined owing to the preliminary use of the machining apparatus 1, may then be wound around a core N, as shown in figures 13-16, for example to form an electrical energy storage device. Below, reference will be made, in particular, to Figure 13 that, for the sake of simplicity, does not illustrate other components of the electrical energy storage device, like for example the other electrode belt (with the opposite sign) and one or more separating belts.

The wound product may comprise, as in this embodiment, a plurality of winding coils of the material M around the core N. The wound product may comprise a plurality of electrode tabs t1, t2, t3, ...., tN, superimposed on one another. The electrode tabs t1, t2, t3, ...., tN, may be made by the machining apparatus 1 (blanking apparatus). The machining apparatus 1 may be configured to form the electrode tabs t1, t2, t3, ...., tN, in preset positions in the longitudinal extent of the material M so that the tabs are mutually superimposed, considering that the dimensions of the wound product increase progressively at each winding revolution, so that the length of each winding coil is greater than the more interior coils.

The machining apparatus 1 may comprise, in particular, a feed path of the material M. The feed path may comprise, for example, means (for example of known and not illustrated type) for dragging the material M along the path, means (for example of the roller type) for guiding the material M along the path, means (for example of known type and not illustrated) for tensioning the material M along the path.

The machining apparatus 1 may comprise, in particular, first machining means 4 arranged along the aforesaid feed path for operating intermittently (with a determined period that, as will be seen, will be variable), in particular for performing a succession of working cycles on the material M, in which at each working cycle the first machining means 4 adopts at least one open position in which it leaves the transit of the material M free and at least one closed position in which it performs at least one machining task on the material M.

The machining apparatus 1 may comprise, in particular, second machining means 6 arranged along the aforesaid feed path for operating intermittently, in particular for performing a succession of working cycles on the material M, in which at each working cycle the second machining means 6 adopts at least one open position in which it leaves the transit of the material M free and at least one closed position in which it performs at least one machining task on the material M.

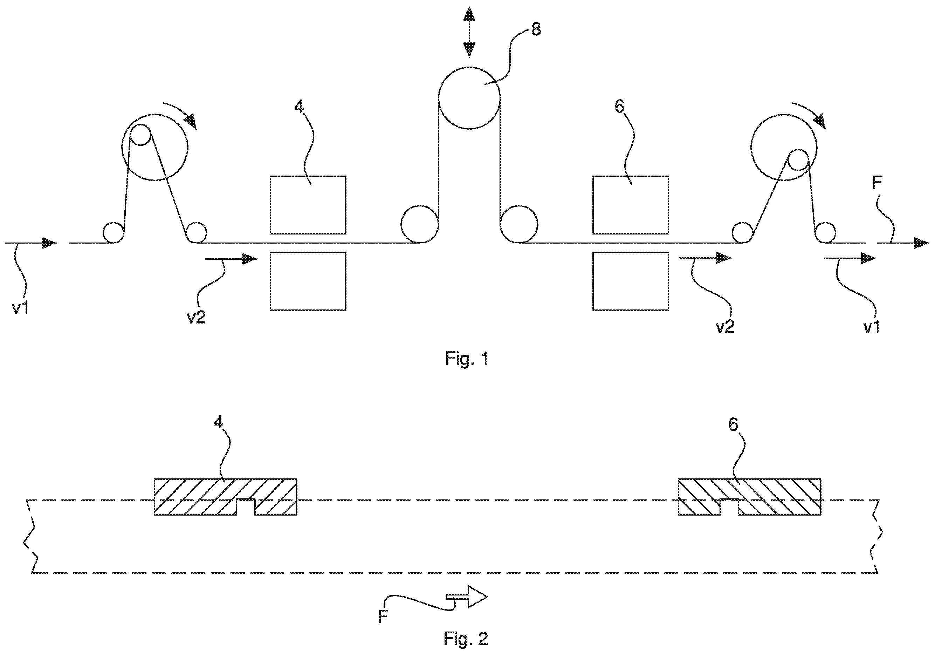

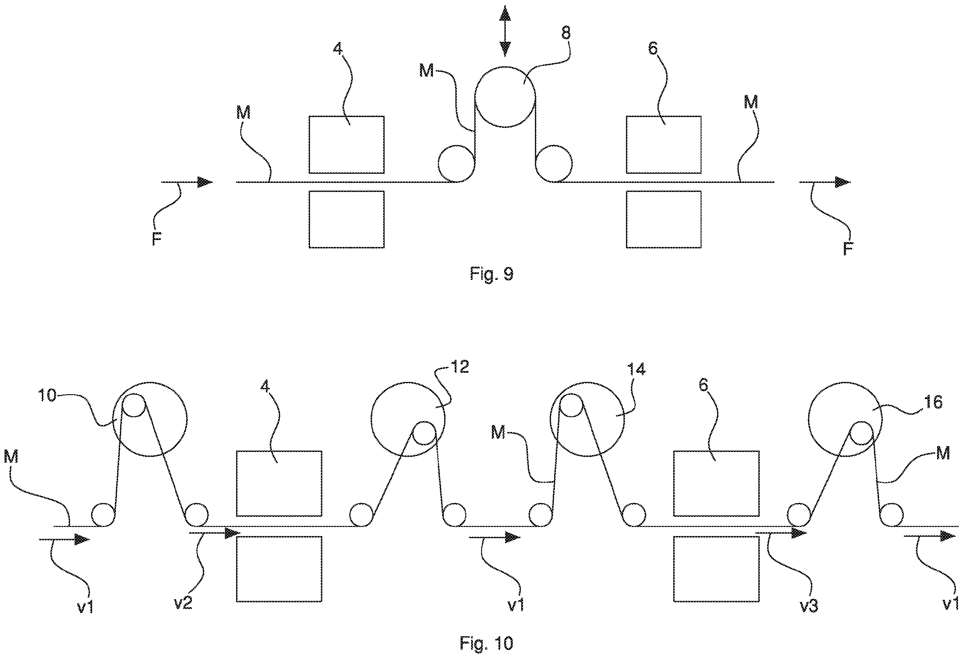

The second machining means 6 may be arranged, in particular, after the first machining means 4, with reference to a feed direction F of the material along the path. The period of the working cycles of the second machining means 6 may be the same as the period of the working cycles of the first machining means 4, as in the embodiments of figures 1 and 9. The period of the working cycles of the second machining means 6 may be different and adjustable regardless of the period of the working cycles of the first machining means 4, as in the embodiments of figures 10 and 11-12.

The first machining means 4 may comprise, in particular, at least one first blanking device for blanking the material for forming electrode tabs of an electrical energy storage device. The second machining means 6 may comprise, in particular, at least one second device for blanking the material for forming electrode tabs of an electrical energy storage device. The first machining means 4 may comprise, in particular, at least one pair of members (blanking half moulds) that are movable with respect to one another by being driven to operate on the material M. The second machining means 6 may comprise, in particular, at least one pair of members (blanking half moulds) that are movable with respect to one another by being driven to operate on the material M.

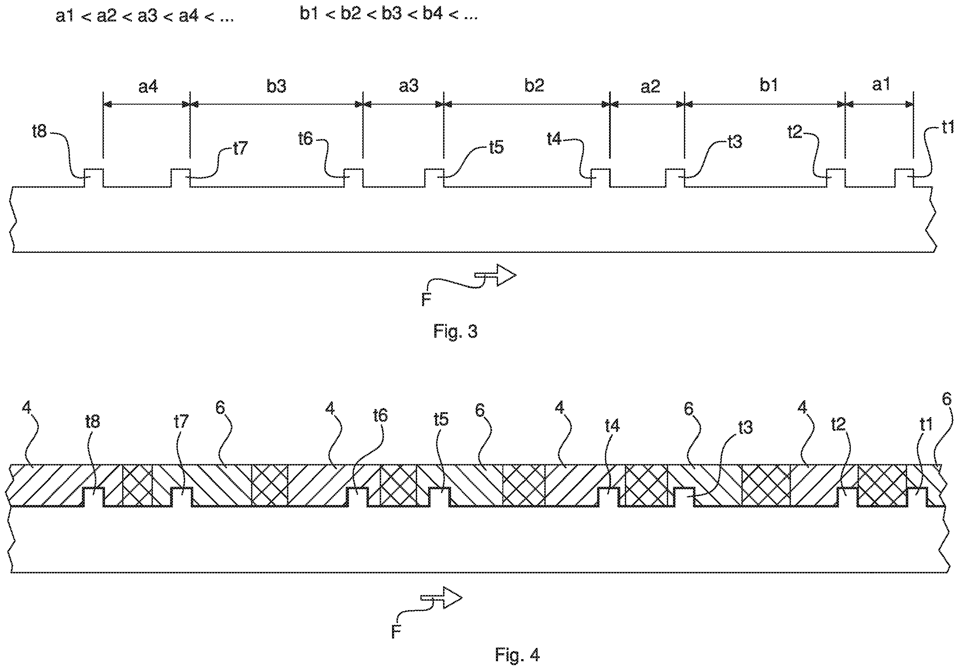

In figure 2 the profile is shown schematically of the blanking members of the and second machining means 4 and 6, which are suitable for forming the electrode tabs on an electrode belt. In figure 3 the profile is shown schematically of the machined material M comprising the various electrode tabs t1, t2, t3, ..., obtained by the first and the second machining means 4 and 6.

In particular, each of the two aforesaid machining means 4 and 6 (blanking devices) may comprise two (opposite) machining (blanking) half moulds that are movable in relation to another for operating intermittently, adopting a closed position in which the material M is machined (blanked) and an open position in which the material M can advance between the two machining half moulds.

The first machining means 4 may be configured, for example, to form a part of the electrode tabs t2, t4, t6, t8, ..., for the electrical energy storage device. The second machining means 6 may be configured, for example, to form another part of the electrode tabs t1, t3, t5, t7, ..., for the electrical energy storage device.

The machining apparatus 1 may comprise, in particular, means for varying the period/frequency of the working cycles of the first machining means 4 and/or of the second machining means 6 whilst the material M advances along the path.

The machining apparatus 1 may comprise, in particular, means for varying the length of a portion of the path of the material M comprised between the first machining means 4 and the second machining means 6.

The means for varying the length may comprise, as in the embodiments of figure 1 and 9, at least one element 8 on which the material M slides that advances along the feed path. The position of the aforesaid element 8 may be adjustable. This position may be adjustable by driving means (for example an electric motor that is of known type and is not illustrated) that controls a movement of the aforesaid element 8. The aforesaid element 8 may be, in particular, rotatable around an axis. The aforesaid elements 8 may comprise, for example, at least one wheel or pulley that is (freely) rotatable around a rotation axis, in which the position of the rotation axis may be adjustable.

The means for varying the length may be controlled, in particular, in such a manner as to vary the aforesaid length when the first machining means 4 is in an open position (for each working cycle) and/or when the second machining means 6 is in an open position (for each working cycle). The means for varying the length may be controlled so as to increase progressively the aforesaid length of the path portion at each working cycle of the first machining means and/or at each working cycle of the second machining means.

The aforesaid means for varying the period/frequency may comprise, as in the embodiment in figure 1, first guide means 10 arranged along the feed path upstream of the first machining means 4, to receive the incoming material M at a first (constant) speed v1 and to release the exiting material M at a second (variable) speed v2.

The aforesaid means for varying the period/frequency may comprise, as in the embodiment in figure 1, second guide means 12 arranged along the feed path downstream of the second machining means 6 to receive the incoming material M at the second speed v2 and to release the exiting material M at the first speed v1. The second speed v2 may be variable, for example so as to be intermittently nil at set intervals of time during which the first machining means 4 and/or the second machining means 6 are in a closed position. The first speed v1 may be, in particular, always greater than zero (continuous advancement), for example a constant speed v1.

The first and the second guide means 10 and 12 are configured so as to collaborate together and operate in mutual coordination so that the portion of material M comprised between the two guide means 10 and 12 alternates periodically stop steps and advancement steps. In the stop steps, the machining means 4 and 6 can close and machine the material M. In the advancement steps the material may first accelerate to make up for the stop and then decelerate to prepare for the subsequent stop. The advancement of the material M in the path portion that precedes and in the path portion that follows the two guide means 10 and 12 may be continuous (for example a constant speed v1).

The first guide means 10 may comprise, in particular, guide devices with an eccentric roller driven by an electric cam, which are for example identical to those disclosed in patent publication WO 2013/186745 A2. The second guide means 12 may comprise, in particular, guide devices with an eccentric roller driven by an electric cam, which are for example identical to those disclosed in patent publication WO 2013/186745 A2.

The aforesaid means for varying the period/frequency may further comprise (programmable electronic) control means configured so as to vary the advancement period/frequency of the material M, varying, in particular, the time of the advancement steps of the material M, i.e. the time that elapses between two consecutive stop steps of the material M (the stop period may remain constant).

The machining apparatus may comprise, in particular, programmable electronic control means provided with computer programme instructions for controlling the aforesaid means to vary the aforesaid first and/or second guide means.

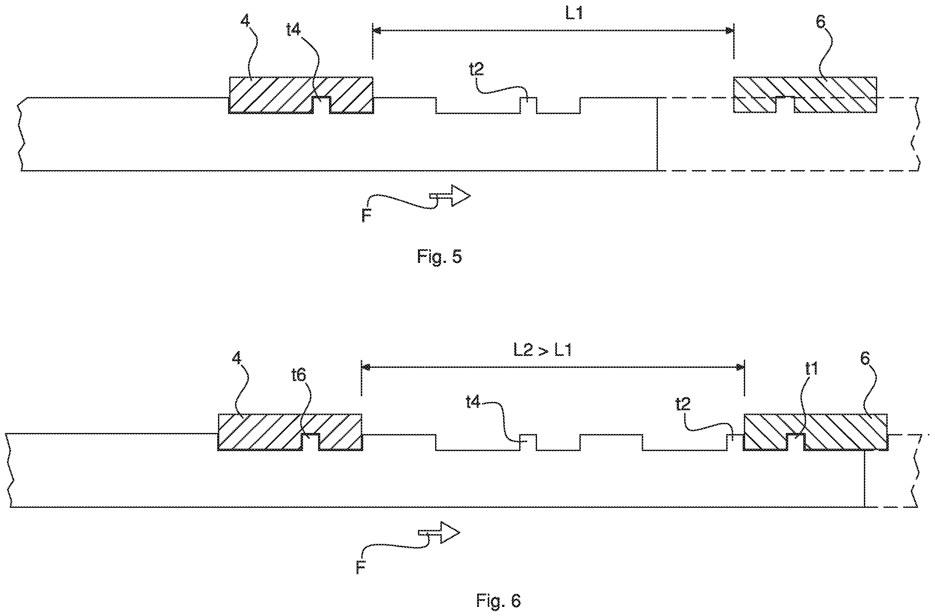

One possible operation of the machining apparatus 1 of figure 1 is disclosed below with reference to figures 5 to 8. The product obtained from the machining may comprise, for example, the electrode belt illustrated schematically in figure 3, which may be wound to form the wound product illustrated schematically in figure 13, where the various electrode tabs are exactly superimposed on one another.

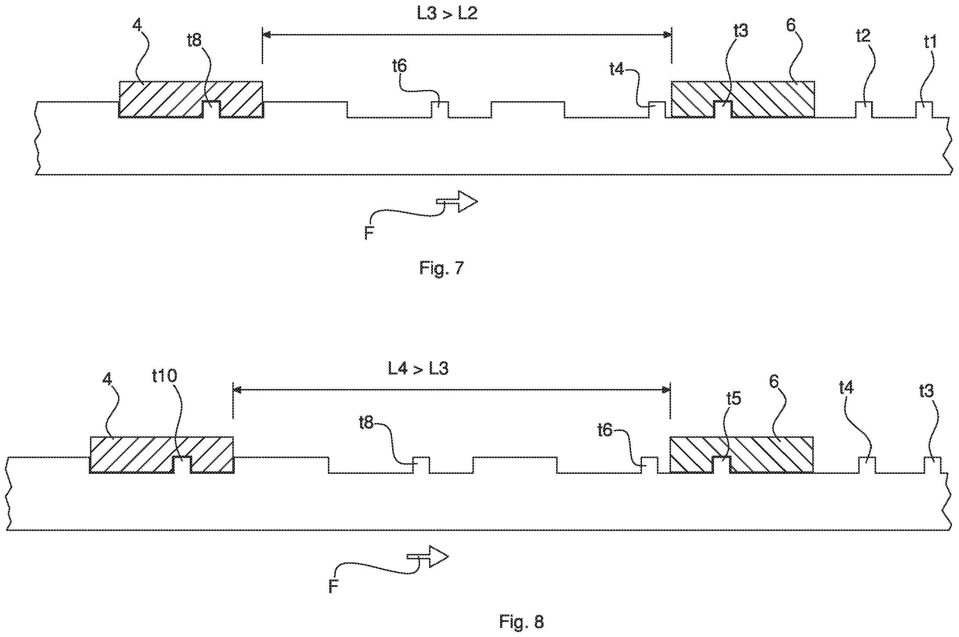

The material M, that advances along the feed path at a continuous advancement speed v1 (for example constant speed), comprises a portion of material that in one path portion (comprised between the guide means 10 and 12) is arrested intermittently. The portion of material M has a first stop period (not illustrated), in which the first machining means 4 forms the electrode tab t2. In a second stop period (figure 5), the first machining means 4 forms the electrode tab t4. In a third stop period (figure 6) the first machining means 4 forms the electrode tab t6 whereas the second machining means 6 forms the tab t1. In a fourth stop period (figure 7) the first machining means 4 forms the electrode tab t8 whereas the second machining means 6 forms the tab t3. In a fifth stop period (figure 8) the first machining means 4 forms the electrode tab t10 whereas the second machining means 6 forms the tab t5.

The various tabs t1, t2, t3, ..., are distributed according to a double step: the first step has been indicated with a1, a2, a3, ... and the second step (of a length that is greater on average than the first step) with b1, b2, b3, ... (figure 3). The first step a1, a2, a3, ... and the second step b1, b2, b3, ... alternate between one another. The double step distribution occurs because in the wound product (figure 13) the tabs will be superimposed on a non-symmetrical position (on a non-circular winding core) on both the halves of the wound product (in figure 13, both above and below). The first step and the second step will both be progressively variable as the dimensions of the wound product increase progressively at each winding revolution, so that a1 < a2 < a3 < ... and b1 < b2 < b3 < ... (figure 3).

With reference to figure 3, the distance between the electrode tabs t2 and t4 (formed by the first machining means 4) is equal to b1 + a2. The distance between the electrode tabs t4 and t6 (formed by the first machining means 4) is equal to b2 + a3. The increase of the distance between the first pair of electrode tabs t2-t4 and the second pair of electrode tabs t4-t6 is equal to b2 + a3 - (b1 + a2) = Δ'.

The distance between the electrode tabs t1 and t3 (formed by the second machining means 6) is equal to a1 + b1. The distance between the electrode tabs t3 and t5 (formed by the second machining means 6) is equal to a2 + b2. The increase of the distance between the first pair of electrode tabs t1-t3 and the second pair of electrode tabs t3-t5 is equal to a2 + b2 - (a1 + b1) = Δ", where Δ" ≠ Δ' (in particular Δ' > Δ").

Adjusting the distribution of the electrode tabs with a double step may thus be achieved, as in this specific case, by adjusting in a different manner the variable distance between the electrode tabs t2, t4, t6, t8, ... formed by the first machining means 6 with respect to the variable distance between the electrode tabs t1, t3, t5, t7, ... formed by the second machining means 6.

Each of the machining apparatuses disclosed here may comprise, for this purpose, two adjusting systems (driven independently of one another) that cooperate together, in a coordinated manner, to permit adjustment with two steps, each of which is variable in a different mode from the other (double step with double variability).

A first adjusting system may comprise, as in the embodiment in figure 1, the (programmable electronic) control means configured for varying the period/frequency of the working cycle of the first and second guide means 10 and 12 and, accordingly, of the first and second machining means 4 and 6 that operate together (simultaneously with one another) at the same periods/frequencies.

A second adjusting system may comprise, as in the embodiment in figure 1, the means set up for varying (for example progressively lengthening) the length L1, L2, L3, ..., of the path portion comprised between the two machining means 4 and 6. In Figures 5 to 8 the variation of the length of the path portion is represented. The representation is fictitious because, actually, the machining means 4 and 6 does not undergo shifts along the path of the material M, whereas the adjusting element 8 is the adjusting element that shifts to vary the length of the path portion of the material M comprised between the two machining means 4 and 6.

The two adjusting systems mentioned above, which are activated in mutual cooperation, enable both the variability of the first step (al, a2, a3, etc., in this case the "shorter" step), and the variability of the second step (b1, b2, b3, etc., in this case the "longer" step) to be modulated, or similarly, both the variability of the distance between the portions of material worked by the first machining means 4 (electrode tabs t2, t4, t6, etc.), and the variability of the distance between the portions of material machined by the second machining means 6 (electrode tabs t1, t3, t5, etc.).

Figure 4 illustrates the relative positions of the blanking members of the first and second machining means 4 and 6 with respect to the material M during various blanking steps, in which for the sake of simplicity of representation, the material has been considered to be stationary and the blanking members to be movable along the path, although in reality the material is movable and the blanking members operate in the same position along the path. With Z, superimposing zones have been indicated in which the blanking actions of the two blanking members are superimposed on one another (in a redundant manner). It is seen how the extent of the superimposing zones Z is greatest at the start (it cannot be greater than the distance or step between the first two electrode tabs t1 and t2) to then decrease gradually as the formation of the electrode tabs proceeds. The maximum distance or step that is reachable between two consecutive electrode tabs corresponds to the situation in which the overlap Z is nil.

The control of the two adjusting systems may be set on the basis of preset calculations, taking account of the various parameters - such as for example the characteristics (thickness, type, etc.) of the material to be wound, the dimensions of the winding core, the desired positions of the electrode tabs in the wound product, etc. -, even if it is possible to provide for the control being perfected empirically, after the first tests, to perform subsequently the appropriate adjustments.

Figure 14 shows a product consisting of two (electrode) belts wound together. In general, an electrical energy storage device in fact comprises two electrode belts of opposite sign (anode and cathode), alternating with separating belts (not illustrated), each provided with its own electrode tabs. Each electrode belt may be subjected to a forming (blanking) process for forming the various electrode tabs t1, t2, t3, ..., tN, for example as disclosed previously, after which the electrode belts may be coupled (together with the separating belts) to form the winding that will give rise to the electrical energy storage device.

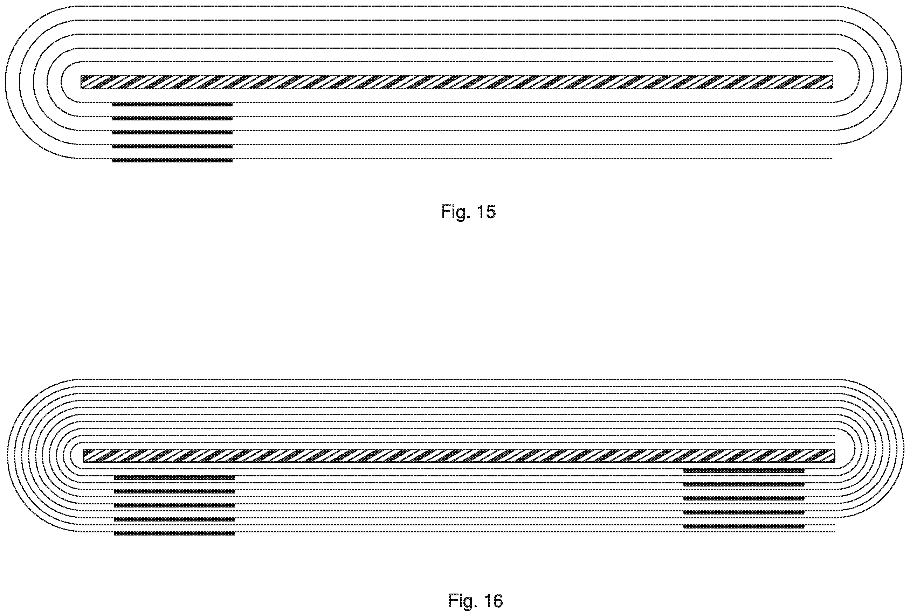

It is possible to use just one of the two adjusting systems, in particular only the means for varying the length, if regulating a double step, as in the embodiment disclosed above, is not necessary, but a single step, for example to make a simpler wound product (for example if the electrode tabs are arranged on a plane of symmetry of the wound product). In figure 15 a wound product is shown that is analogous to that of figure 13, in which however the electrode tabs are arranged only on one half of the product, so that a single step may be adjusted, with a single adjusting system. In figure 16, winding is shown with two electrode belts, analogous to that of figure 14, in which however the electrode tabs are arranged only on one half of the product.

In one embodiment, it is possible to use only one adjusting system comprising the first guide means 10 and the second guide means 12, controlled in such a manner as to vary the operating period, i.e. to vary (increase progressively at each cycle) the interval of time between two consecutive stops of the material M in the zone in which the first machining means 4 operates.

With reference to figure 9, one embodiment is disclosed of a machining apparatus 100 that is able to implement the process disclosed in figures 4 to 8 (adjusting the double step by a double adjusting system) and/or making the product of figure 3. In the machining apparatus 100 the material M is fed along the feed path in an advancement direction F with an intermittent motion comprising the alternation of the advancement and stop cycles of the material. The open positions of the first machining means 4 and/or of the second machining means 6 will be provided during the advancement steps of the material M. The closed positions of the first machining means 4 and/or of the second machining means 6 will be provided during the stop steps of the material.

In this embodiment, the means for varying the period/frequency may comprise control means (for example electronic and programmable control means) configured for varying the period of the material M advancement and stop cycles and, accordingly, the period of the opening and closing cycles of the first and second machining means 4 and 6. The machining apparatus 100 may comprise means for varying the length that is analogous to that disclosed with reference to the apparatus 1 of figure 1 (provided with an adjustable position element 8).

Also the machining apparatus 100 may thus be provided with two adjusting systems (one that is able to vary the length of the path portion between the two machining means and the other that is able to vary the period/frequency of the machining) that, by working in mutual coordination, can make electrode tabs distributed in the length of the material according to the desired variable double step.

With reference to figures 10 and 11-12, another two embodiments of machining apparatuses 101 and 102 are disclosed, each of which is able to implement the process disclosed in figures 4 to 8 (adjusting the double step by a double adjusting system) and/or making the product of figure 3.

In each of the machining apparatuses 101 and 102, the period of the working cycles of the second machining means 6 may be different from the period of the working cycles of the first machining means 4.

In other words, the various closing and opening steps of one of the two machining means may proceed independently and not simultaneously (with different periods/frequencies) with respect to those of the other of the two machining means, whereas in the machining apparatuses 1 and 100 disclosed above the first machining means 4 opened and closed substantially in a simultaneous manner with the second machining means 6, with periods/frequencies that are variable in the same manner for both.

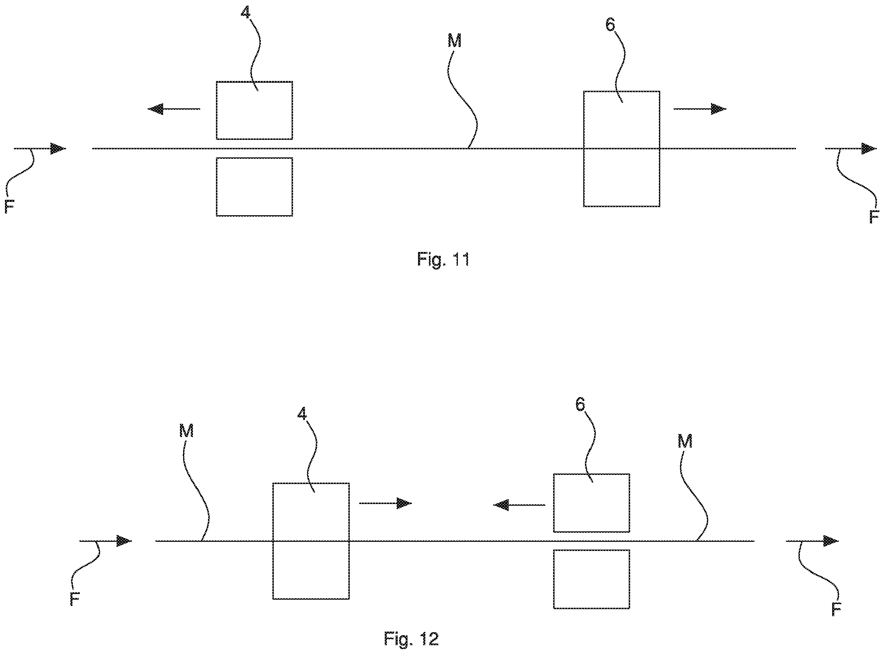

Each of the machining apparatuses 101 (figure 10) and 102 (figures 11 and 12) comprises first and second means for varying the period of the working cycles of the first and second machining means 4 and 6 (whilst the material advances along the path) independently of and differently from one another.

In the machining apparatus 101 of figure 10 the first means for varying the period is substantially analogous to the means for varying the period disclosed with reference to the machining apparatus 1 of figure 1. The machining apparatus 101 in fact comprises first guide means 10, arranged before the first machining means 4, and second guide means 12, arranged after the first machining means 4 but, in this case, before the second machining means 6. The first and second guide means 10 and 12 of the machining apparatus 101 may comprise, in particular, guide devices with an eccentric roller driven by a first electric cam, for example identical to that disclosed in patent publication WO 2013/186745 A2.

The machining apparatus 101 further comprises third guide means 14, arranged after the second guide means 12 and before the second machining means 6, and fourth guide means 16, arranged after the second machining means 6. The third and fourth guide means 14 and 16 are substantially analogous to the first and second guide means 10 and 12. The third and fourth guide means 14 and 16 may comprise, in particular, guide devices with an eccentric roller driven by a second electric cam (in particular different from the first electric cam), that are for example identical to those disclosed in patent publication WO 2013/186745 A2.

The first and second electric cam may be set in such a manner as to make a double adjusting system that is able to form the electrode tabs t1, t2, t3, etc, which are distributed with a double variable step.

The first guide means 10 may receive the incoming material M at a first (constant) speed v1 and release the exiting material M at a second speed v2 (variable, in particular in a periodic manner). The second guide means 12 may receive the incoming material M at the second speed v2 and release the exiting material M at the first speed v1. The second speed v2 may be variable so as to be intermittently nil in determined intervals of time during which the first machining means 4 is in the closed position. The first speed v1 may be, in particular, always greater than zero (continuous advancement), for example constant.

The third guide means 14 may receive the incoming material M at the first speed v1 and release the exiting material M at a third (variable) speed v3. The fourth guide means 16 may receive the incoming material M at the third speed v3 and release the exiting material M at the first speed v1. The third speed v3 may be variable so as to be intermittently nil in determined intervals of time during which the second machining means 6 is in the closed position.

The aforesaid first electric cam may drive the first and second guide means 10 and 12 so as to progressively increase the time of the moving steps of the material M (the time of the stop steps may remain constant), so as to increase progressively, consequently, also the period of the working cycles of the first machining means 4 at each working cycle.

Similarly, the aforesaid second electric cam may drive the third and fourth guide means 14 and 16 so as to increase progressively the time of the steps of moving the material M (the time of the stop steps may remain constant), so as to increase progressively, consequently, also the period of the working cycles of the second machining means 6 at each working cycle.

Adjusting the work period/frequency of the two operating groups (where the first operating unit comprises the operating means indicated by 4, 10, 12 and the second operating unit comprises the operating means indicated by 6, 14 e 16), independently of and differently from one another, may give rise to the double adjusting system that is able to make the variable double step distribution of the electrode tabs.

In the machining apparatus 102 (figures 11 and 12), the material M is fed along the feed path continuously (in particular at a constant speed), whereas the first machining means 4 is moved with reciprocating motion with outward and return cycles, and similarly also the second machining means 6 is moved with reciprocating motion with outward and return cycles, independently of the first machining means 4, with cycles provided with their own periods/frequencies and which are adjustable in a different way. The open and, respectively, closed positions of the first machining means 4 will be provided during the return and, respectively, the outward cycles of the first machining means 4. Patent publication US 2014/0174268 shows an embodiment of such (blanking) machining means operating with reciprocating motion (outward and return cycles). The second machining means 6 may be configured analogously, with open and, respectively closed positions of the second machining means 6 that will be provided during the return and, respectively, the outward cycles of the second machining means 6.

The machining apparatus 102 may thus be provided with a double adjusting system, for forming electrode tabs distributed with a double variable step, by virtue of the fact that the two machining means 4 and 6 may be controlled independently of one another with working cycles (closed outward cycle and open return cycle) having variable periods, each of which according to its own stroke.

## Claims

1. Machining apparatus suitable to form electrode tabs (t1,t2,t3,...) comprising:
- a feed path of material (M);
- first machining means (4) arranged along said path to perform a succession of working cycles alternating open positions, in which it leaves free the passage of the material (M), and closed positions, in which it performs at least one machining operation on the material (M);
- second machining means (6) arranged along said path to perform a succession of working cycles alternating open positions, in which it leaves free the passage of the material (M), and closed positions, in which it performs at least one machining operation on the material (M), said second machining means (6) being arranged after said first machining means (4) with reference to a feed direction (F) of the material (M);
- first means for varying the period/frequency of the working cycles of said first machining means (4) while the material (M) advances along said path;
- second means for varying the period/frequency of the working cycles of said second machining means (6) while the material (M) advances along said path, the period/frequency of the working cycles of said second machining means (6) being different from the period/frequency of the working cycles of said first machining means (4);
- wherein said first means for varying comprises first guide means (10) arranged along said path before said first machining means (4) to receive the material (M) at a first speed (v1) and to deliver the material (M) at a second speed (v2), and second guide means (12) arranged along said path after said first machining means (4) and before said second machining means (64) to receive the material (M) at said second speed (v2) and to deliver the material (M) at said first speed (v1)..

2. Apparatus according to claim 1, wherein said first machining means (4) is configured to form electrode tabs (t1, t2, t3, ...) and/or wherein said second machining means (6) is configured to form electrode tabs (t1, t2, t3, ...), the machined material being intended to be wound to form a wound product, said first and second means for varying being controlled so that in the wound product the electrode tabs (t1, t2, t3, ...) are superimposed on each other.

3. Apparatus according to claim 1 or 2, wherein said first means for varying is controlled so as to progressively increase the period of the working cycles of said first machining means (4) at each working cycle and/or wherein said second means for varying is controlled so as to progressively increase the period of the working cycles of said second machining means (6) at each working cycle.

4. Apparatus according to claim 1 4 , wherein said second speed (v2) is variable so as to be null intermittently in time intervals during which said first machining means (4) is in closed position; said first speed (v1) being, in particular constant.

5. Apparatus according to claim 3 or 4 , wherein said second means for varying comprises: third guide means (14) arranged along said path after said second guide means (12) and before said second machining means (6) to receive the material (M) at said first speed (v1) and to deliver the material (M) at a third speed (v3); and/or fourth guide means (16) arranged along said path after said second machining means (6) to receive the material (M) at said third speed (v3) and to deliver the material (M) at said first speed (v1).

6. Apparatus according to claim 5 , wherein said third speed (v3) is variable so as to be null intermittently in time intervals during which said second machining means (4) is in closed position; said first speed (v1) being, in particular constant.

7. Apparatus according to any one of claims 1 to 3, wherein the material (M) is continuously fed along said path, said first machining means (4) being moved with alternate motion with outward and return cycles, said second machining means (6) being moved with alternate motion with outward and return cycles, the open and, respectively, closed positions of said first and second machining means (4; 6) being provided during the returns and, respectively, the outwards of the same machining means; said first means for varying comprising means for varying the period/frequency of the outward and return cycles of the first machining means (4) and/or said second means for varying comprising means for varying the period/frequency of the outward and return cycles of the second machining means (6); the variation of the period/frequency of the outward and return cycles of the first machining means (4) being, in particular, different with respect to the variation of the period/frequency of the outward and return cycles of the second machining means (6).

8. Apparatus according to any one of the preceding claims, wherein said first machining means (4) comprises at least one first cutting device of the material to form electrode tabs (t1, t2, t3, ...) for an electrical energy storage device and/or wherein said second machining means (6) comprises at least one second cutting device of the material to form electrode tabs (t1, t2, t3, ...) for an electrical energy storage device.

9. Apparatus according to any one of the preceding claims, wherein the machined material is intended to be wound to form a wound product, said first and second means for varying being controlled so that in the wound product the machined portions are in desired positions and/or wherein said second means for varying are independent from said first means for varying.

10. Machining method using a machining apparatus according to claim 1, the method comprising the steps of:
- feeding material (M) along a path;
- performing a succession of working cycles in which first machining means (4) assumes at each working cycle at least one open position in which it leaves free the passage of the material (M) and at least one closed position in which it performs at least one machining operation on the material (M);
- performing a succession of working cycles in which second machining means (6) assumes at each working cycle at least one open position in which it leaves free the passage of the material (M) and at least one closed position in which it performs at least one machining operation on the material (M), said second machining means (6) being arranged after said first machining means (4) with reference to a feeding direction (F) of the material (M);
- varying the period/frequency of the working cycles of said first machining means (4) and the period/frequency of the working cycles of said second machining means (6) while the material (M) advances along said path by using the first and the second means of the machining apparatus according to claim 1 for varying the period/ frequency of the working cycles of said first and said second machining means; wherein said first machining means (4) forms, in particular, electrode tabs (t2, t4, t6, ...) for an electrical energy storage device and/or wherein said second machining means (6) forms, in particular, electrode tabs (t1, t3, t5, ...) for an electrical energy storage device; wherein said varying the period of the working cycles determines, in particular, the variation in a distance or step between the electrode tabs (t1, t2, t3, ...) so that the material (M) can be wound to form the electrical energy storage device with the electrode tabs (t1, t2, t3, ...) which are overlapping on each other.

## Patentansprüche

1. Vorrichtung zur Herstellung von Elektrodenfahnen (t1, t2, t3,...), die folgendes aufweist:
- eine Zuführungsbahn für Material (M);
- eine erste Bearbeitungseinrichtung (4), die entlang des Weges angeordnet ist, um eine Folge von Arbeitszyklen auszuführen, die zwischen einer offenen Position, in der sie den Durchgang des Materials (M) frei lässt, und einer geschlossenen Position, in der sie mindestens einen Bearbeitungsvorgang am Material (M) ausführt, alternieren;
- eine zweite Bearbeitungseinrichtung (6), die entlang der Bahn angeordnet ist, um eine Folge von Arbeitszyklen auszuführen, die zwischen offenen Positionen, in denen sie den Durchgang des Materials (M) frei lässt, und geschlossenen Positionen, in denen sie mindestens einen Bearbeitungsvorgang an dem Material (M) ausführt, alternieren, wobei die zweite Bearbeitungseinrichtung (6) hinter der ersten Bearbeitungseinrichtung (4) in Bezug auf eine Vorschubrichtung (F) des Materials (M) angeordnet ist;
- erste Mittel zum Variieren der Periode/Frequenz der Arbeitszyklen der ersten Bearbeitungsmittel (4), während sich das Material (M) entlang der Bahn vorwärts bewegt;
- ein zweites Mittel zum Variieren der Periode/Frequenz der Arbeitszyklen des zweiten Bearbeitungsmittels (6), während sich das Material (M) entlang des Weges vorwärts bewegt, wobei die Periode/Frequenz der Arbeitszyklen des zweiten Bearbeitungsmittels (6) sich von der Periode/Frequenz der Arbeitszyklen des ersten Bearbeitungsmittels (4) unterscheidet;
- wobei das erste Mittel zum Variieren ein erstes Führungsmittel (10) aufweist, das entlang des Weges vor dem ersten Bearbeitungsmittel (4) angeordnet ist, um das Material (M) mit einer ersten Geschwindigkeit (v1) zu empfangen und das Material (M) mit einer zweiten Geschwindigkeit (v2) abzugeben, und ein zweites Führungsmittel (12), das entlang des Weges nach dem ersten Bearbeitungsmittel (4) und vor dem zweiten Bearbeitungsmittel (64) angeordnet ist, um das Material (M) mit der zweiten Geschwindigkeit (v2) zu empfangen und das Material (M) mit der ersten Geschwindigkeit (v1) abzugeben.

2. Vorrichtung nach Anspruch 1, wobei die erste Bearbeitungseinrichtung (4) ausgebildet ist, um Elektrodenfahnen (t1, t2, t3, ...) auszubilden und/oder wobei die zweite Bearbeitungseinrichtung (6) ausgebildet ist, um Elektrodenfahnen (t1, t2, t3, ...) auszubilden, wobei das bearbeitete Material dazu bestimmt ist, zur Bildung eines gewickelten Produkts gewickelt zu werden, wobei die erste und die zweite Einrichtung zum Variieren so geregelt werden, dass in dem gewickelten Produkt die Elektrodenfahnen (t1, t2, t3, ...) übereinander liegen.

3. Vorrichtung nach Anspruch 1 oder 2, wobei das erste Mittel zur Veränderung so geregelt wird, dass die Periode der Arbeitszyklen des ersten Bearbeitungsmittels (4) bei jedem Arbeitszyklus progressiv erhöht wird und/oder wobei das zweite Mittel zur Veränderung so geregelt wird, dass die Periode der Arbeitszyklen des zweiten Bearbeitungsmittels (6) bei jedem Arbeitszyklus progressiv erhöht wird.

4. Vorrichtung nach Anspruch 1, wobei die zweite Geschwindigkeit (v2) so variabel ist, dass sie in den Zeitintervallen, in denen sich die erste Bearbeitungseinrichtung (4) in geschlossener Position befindet, intermittierend Null ist; wobei die erste Geschwindigkeit (v1) insbesondere konstant ist.

5. Vorrichtung nach Anspruch 3 oder 4, wobei die zweite Einrichtung zum Variieren aufweist: eine dritte Führungseinrichtung (14), die entlang des Weges nach der zweiten Führungseinrichtung (12) und vor der zweiten Bearbeitungseinrichtung (6) angeordnet ist, um das Material (M) mit der ersten Geschwindigkeit (v1) zu empfangen und das Material (M) mit einer dritten Geschwindigkeit (v3) abzugeben; und/oder eine vierte Führungseinrichtung (16), die entlang des Weges nach der zweiten Bearbeitungseinrichtung (6) angeordnet ist, um das Material (M) mit der dritten Geschwindigkeit (v3) zu empfangen und das Material (M) mit der ersten Geschwindigkeit (v1) abzugeben.

6. Vorrichtung nach Anspruch 5, wobei die dritte Geschwindigkeit (v3) so variabel ist, dass sie in den Zeitintervallen, in denen sich die zweite Bearbeitungseinrichtung (4) in geschlossener Position befindet, intermittierend Null ist; wobei die erste Geschwindigkeit (v1) insbesondere konstant ist.

7. Vorrichtung nach einem der Ansprüche 1 bis 3, wobei das Material (M) kontinuierlich entlang der Bahn zugeführt wird, wobei die erste Bearbeitungseinrichtung (4) mit einer alternierenden Bewegung mit Hin- und Rücklaufzyklen bewegt wird, wobei die zweite Bearbeitungseinrichtung (6) mit einer alternierenden Bewegung mit Hin- und Rücklaufzyklen bewegt wird, wobei die offenen bzw. geschlossenen Positionen der ersten und zweiten Bearbeitungseinrichtung (4; 6) die offenen bzw. geschlossenen Positionen der ersten und zweiten Bearbeitungsmittel (4; 6) während der Hin- bzw. Rücklaufzyklen derselben Bearbeitungsmittel vorgesehen sind; wobei die ersten Mittel zur Veränderung Mittel zur Veränderung der Periode/Frequenz der Hin- und Rücklaufzyklen der ersten Bearbeitungsmittel (4) aufweisen und/oder die zweiten Mittel zur Veränderung Mittel zur Veränderung der Periode/Frequenz der Hin- und Rücklaufzyklen der zweiten Bearbeitungsmittel (6) aufweisen; wobei die Veränderung der Periode/Frequenz der Hin- und Rücklaufzyklen des ersten Bearbeitungsmittels (4) insbesondere unterschiedlich ist in Bezug auf die Veränderung der Periode/Frequenz der Hin- und Rücklaufzyklen des zweiten Bearbeitungsmittels (6).

8. Vorrichtung nach einem der vorhergehenden Ansprüche, wobei die erste Bearbeitungseinrichtung (4) mindestens eine erste Schneidvorrichtung aus dem Material zur Bildung von Elektrodenfahnen (t1, t2, t3, ... ) für eine elektrische Energiespeichereinrichtung aufweist und/oder wobei die zweite Bearbeitungseinrichtung (6) mindestens eine zweite Schneidvorrichtung aus dem Material zur Bildung von Elektrodenfahnen (t1, t2, t3, ... ) für eine elektrische Energiespeichereinrichtung aufweist.

9. Vorrichtung nach einem der vorhergehenden Ansprüche, wobei das bearbeitete Material dazu bestimmt ist, zur Bildung eines gewickelten Produkts gewickelt zu werden, wobei die ersten und zweiten Mittel zum Verändern so geregelt werden, dass sich die bearbeiteten Teile in dem gewickelten Produkt in den gewünschten Positionen befinden und/oder wobei die zweiten Mittel zum Verändern unabhängig von den ersten Mitteln zum Verändern sind.

10. Ein Verfahren unter Verwendung einer Vorrichtung nach Anspruch 1, wobei das Verfahren die folgenden Schritte aufweist:
- Zuführen von Material (M) entlang einer Bahn;
- Durchführen einer Folge von Arbeitszyklen, bei denen das erste Bearbeitungsmittel (4) bei jedem Arbeitszyklus mindestens eine offene Position einnimmt, in der es den Durchgang des Materials (M) frei lässt, und mindestens eine geschlossene Position einnimmt, in der sie mindestens einen Bearbeitungsvorgang an dem Material (M) durchführt;
- Durchführen einer Folge von Arbeitszyklen, in denen das zweite Bearbeitungsmittel (6) bei jedem Arbeitszyklus mindestens eine offene Position einnimmt, in der es den Durchgang des Materials (M) frei lässt, und mindestens eine geschlossene Position, in der es mindestens einen Bearbeitungsvorgang an dem Material (M) durchführt, wobei das zweite Bearbeitungsmittel (6) in Bezug auf eine Zuführungsrichtung (F) des Materials (M) hinter dem ersten Bearbeitungsmittel (4) angeordnet ist;
- Variieren der Periode/Frequenz der Arbeitszyklen der ersten Bearbeitungseinrichtung (4) und der Periode/Frequenz der Arbeitszyklen der zweiten Bearbeitungseinrichtung (6), während das Material (M) entlang des Weges bewegt, indem die ersten und zweiten Mittel der Vorrichtung nach Anspruch 1 verwendet werden, um die Periode/Frequenz der Arbeitszyklen der ersten und zweiten Bearbeitungsmittel zu verändern;
wobei das erste Bearbeitungsmittel (4) insbesondere Elektrodenfahnen (t2, t4, t6, ... ) für eine elektrische Energiespeichereinrichtung ausbildet und/oder wobei das zweite Bearbeitungsmittel (6) insbesondere Elektrodenfahnen (t1, t3, t5, ... ) für eine elektrische Energiespeichervorrichtung ausbildet; wobei das Variieren der Periode der Arbeitszyklen insbesondere die Variation eines Abstandes oder Schrittes zwischen den Elektrodenfahnen (t1, t2, t3, ...) bestimmt, so dass das Material (M) gewickelt werden kann, um die elektrische Energiespeichervorrichtung mit den Elektrodenfahnen (t1, t2, t3, ... ) auszubilden, die sich gegenseitig überlappen.

## Revendications

1. Appareil d'usinage apte à former des pattes d'électrode (t1, t2, t3, ...) comprenant :
- un trajet d'alimentation de matériau (M) ;
- un premier moyen d'usinage (4) disposé le long dudit trajet pour effectuer une succession de cycles de travail alternant des positions ouvertes, dans lesquelles le passage du matériau (M) est laissé libre, et des positions fermées, dans lesquelles au moins une opération d'usinage est réalisée sur le matériau (M) ;
- un second moyen d'usinage (6) disposé le long dudit trajet pour effectuer une succession de cycles de travail alternant des positions ouvertes, dans lesquelles le passage du matériau (M) est laissé libre, et des positions fermées, dans lesquelles au moins une opération d'usinage est réalisée sur le matériau (M), ledit second moyen d'usinage (6) étant disposé après ledit premier moyen d'usinage (4) par rapport à une direction d'alimentation (F) du matériau (M) ;
- un premier moyen permettant de faire varier la période/fréquence des cycles de travail dudit premier moyen d'usinage (4) à mesure que le matériau (M) avance le long dudit trajet ;
- un second moyen permettant de faire varier la période/fréquence des cycles de travail dudit second moyen d'usinage (6) à mesure que le matériau (M) avance le long dudit trajet, la période/fréquence des cycles de travail dudit second moyen d'usinage (6) étant différente de la période/fréquence des cycles de travail dudit premier moyen d'usinage (4) ;
- dans lequel ledit premier moyen de variation comprend un premier moyen de guidage (10) disposé le long dudit trajet avant ledit premier moyen d'usinage (4) de façon à recevoir le matériau (M) à une première vitesse (v1) et à libérer le matériau (M) à une seconde vitesse (v2), et un second moyen de guidage (12) disposé le long dudit trajet après ledit premier moyen d'usinage (4) et avant ledit second moyen d'usinage (64) de façon à recevoir le matériau (M) à ladite seconde vitesse (v2) et à libérer le matériau (M) à ladite première vitesse (v1).

2. Appareil selon la revendication 1, dans lequel ledit premier moyen d'usinage (4) est conçu pour former des pattes d'électrode (t1, t2, t3, ...) et/ou dans lequel ledit second moyen d'usinage (6) est conçu pour former des pattes d'électrode (t1, t2, t3, ...), le matériau usiné étant destiné à être enroulé pour former un produit enroulé, lesdits premier et second moyens de variation étant contrôlés de façon à ce que les pattes d'électrode (t1, t2, t3, ...) soient superposées les unes aux autres au sein du produit enroulé.

3. Appareil selon la revendication 1 ou 2, dans lequel ledit premier moyen de variation est contrôlé de manière à augmenter progressivement la période des cycles de travail dudit premier moyen d'usinage (4) à chaque cycle de travail et/ou dans lequel ledit second moyen de variation est réglé de façon à augmenter progressivement la période des cycles de travail dudit second moyen d'usinage (6) à chaque cycle de travail.

4. Appareil selon la revendication 1, dans lequel ladite seconde vitesse (v2) est variable de manière à ce qu'elle soit nulle par intermittence dans des intervalles de temps au cours desquels ledit premier moyen d'usinage (4) est en position fermée ; ladite première vitesse (v1) étant, en particulier, constante.

5. Appareil selon la revendication 3 ou 4, dans lequel ledit second moyen de variation comprend : un troisième moyen de guidage (14) disposé le long dudit trajet après ledit second moyen de guidage (12) et avant ledit second moyen d'usinage (6) de façon à recevoir le matériau (M) à ladite première vitesse (v1) et à libérer le matériau (M) à une troisième vitesse (v3) ; et/ou un quatrième moyen de guidage (16) disposé le long dudit trajet après ledit second moyen d'usinage (6) de façon à recevoir le matériau (M) à ladite troisième vitesse (v3) et à libérer le matériau (M) à ladite première vitesse (v1).

6. Appareil selon la revendication 5, dans lequel ladite troisième vitesse (v3) est variable de manière à être nulle par intermittence dans des intervalles de temps au cours desquels ledit deuxième moyen d'usinage (4) est en position fermée ; ladite première vitesse (v1) étant, en particulier, constante.

7. Appareil selon l'une quelconque des revendications 1 à 3, dans lequel le matériau (M) est alimenté en continu le long dudit trajet, ledit premier moyen d'usinage (4) étant déplacé à l'aide d'un mouvement alterné avec des cycles d'aller-retour, ledit second moyen d'usinage (6) étant déplacé à l'aide d'un mouvement alterné avec des cycles d'aller-retour, les positions ouvertes et, respectivement, fermées desdits premier et second moyens d'usinage (4 ; 6) étant fournies au cours des retours et, respectivement, les allers du même moyen d'usinage ; ledit premier moyen de variation comprenant un moyen permettant de faire varier la période/fréquence des cycles d'aller-retour du premier moyen d'usinage (4) et/ou ledit second moyen de variation comprenant des moyens permettant de faire varier la période/fréquence des cycles d'aller-retour du second moyen d'usinage (6) ; la variation de la période/fréquence des cycles d'aller-retour du premier moyen d'usinage (4) étant, en particulier, différente de la variation de la période/fréquence des cycles d'aller-retour du second moyen d'usinage (6).

8. Appareil selon l'une quelconque des revendications précédentes, dans lequel ledit premier moyen d'usinage (4) comprend au moins un premier dispositif de découpe du matériau pour former des pattes d'électrode (t1, t2, t3, ...) destinées à un dispositif de stockage d'énergie électrique et/ou dans lequel ledit second moyen d'usinage (6) comprend au moins un second dispositif de découpe du matériau pour former des pattes d'électrode (t1, t2, t3, ...) destinées à un dispositif de stockage d'énergie électrique.

9. Appareil selon l'une quelconque des revendications précédentes, dans lequel le matériau usiné est destiné à être enroulé pour former un produit enroulé, lesdits premier et second moyens de variation étant contrôlés de manière à ce que les parties usinées se trouvent dans des positions souhaitées au sein du produit enroulé, et/ou dans lequel ledit second moyen de variation est indépendant dudit premier moyen de variation.

10. Procédé d'usinage utilisant un appareil d'usinage selon la revendication 1, le procédé comprenant les étapes consistant à :
- alimenter le matériau (M) le long d'un trajet ;
- réaliser une succession de cycles de travail dans lesquels le premier moyen d'usinage (4) se trouve à chaque cycle de travail dans au moins une position ouverte dans laquelle le passage du matériau (M) est laissé libre et dans au moins une position fermée dans laquelle au moins une opération d'usinage est effectuée sur le matériau (M);
- réaliser une succession de cycles de travail dans lesquels le second moyen d'usinage (6) se trouve à chaque cycle de travail dans au moins une position ouverte dans laquelle le passage du matériau (M) est laissé libre et dans au moins une position fermée dans laquelle au moins une opération d'usinage est effectuée sur le matériau (M), ledit second moyen d'usinage (6) étant disposé après ledit premier moyen d'usinage (4) par rapport à une direction d'alimentation (F) du matériau (M) ;
- faire varier la période/fréquence des cycles de travail dudit premier moyen d'usinage (4) et la période/fréquence des cycles de travail dudit second moyen d'usinage (6) tandis que le matériau (M) avance le long dudit trajet en utilisant les premier et second moyens de l'appareil d'usinage selon la revendication 1 de façon à faire varier la période/fréquence des cycles de travail dudit premier et dudit second moyens d'usinage ;
dans lequel ledit premier moyen d'usinage (4) forme, en particulier, des pattes d'électrodes (t2, t4, t6, ...) destinées à un dispositif de stockage d'énergie électrique et/ou dans lequel ledit second moyen d'usinage (6) forme, en particulier, des pattes d'électrodes (t1, t3, t5, ...) destinées à un dispositif de stockage d'énergie électrique ; dans lequel ladite variation de la période des cycles de travail détermine, en particulier, la variation d'une distance ou d'un pas entre les pattes d'électrode (t1, t2, t3, ...) de manière à ce que le matériau (M) puisse être enroulé pour former le dispositif de stockage d'énergie électrique au sein duquel les pattes d'électrode (t1, t2, t3, ...) se chevauchent les unes sur les autres.
